(19) Europäisches Patentamt / European Patent Office / Office européen des brevets

(11) **EP 3 655 889 B1**

(12) **FASCICULE DE BREVET EUROPEEN**

(45) Date de publication et mention
de la délivrance du brevet:
**31.03.2021 Bulletin 2021/13**

(21) Numéro de dépôt: **18762354.1**

(22) Date de dépôt: **19.07.2018**

(51) Int Cl.:
***G06K 19/06*** *(2006.01)*

(86) Numéro de dépôt international:
**PCT/FR2018/051838**

(87) Numéro de publication internationale:
**WO 2019/016475 (24.01.2019 Gazette 2019/04)**

(54) **MÉTHODE D'AUTHENTIFICATION PAR VOIE OPTIQUE**

VERFAHREN ZUR OPTISCHEN AUTHENTIFIZIERUNG

OPTICAL AUTHENTICATION METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.07.2017 FR 1756908**

(43) Date de publication de la demande:
**27.05.2020 Bulletin 2020/22**

(73) Titulaires:
• **Florent, Jean-Jacques
74000 Annecy (FR)**
• **Monjon, Jean-Michel
Guangzhou 510009 (CN)**
• **Toh, Chin Hon
Singapour 570293 (SG)**

(72) Inventeur: **FLORENT, Jean-Jacques
74000 Annecy (FR)**

(74) Mandataire: **Prugneau, Philippe
Cabinet Prugneau - Schaub
3, avenue Doyen Louis Weil
Le Grenat - Europole
38000 Grenoble (FR)**

(56) Documents cités:
**EP-A1- 1 475 242    EP-A1- 2 849 118
EP-A2- 1 873 616    US-A1- 2006 268 259**

**EP 3 655 889 B1**

**Description**

Domaine technique

Le domaine de l'invention est celui de la lutte contre la contrefaçon et des méthodes d'identification d'objets à l'aide d'identificateurs apposés sur ces objets.

Technique antérieure

Une telle méthode d'authentification est connue du document de brevet WO2006/042913.

Cette méthode d'authentification fournit une solution pour authentifier des objets par (1) formation d'une image d'une marque apposée sur chaque objet à identifier, ici un identificateur à bulles, (2) calcul d'une clef numérique de l'image et (3) comparaison de la clef numérique de l'image avec des clefs numériques stockées à l'avance dans une base de données distante et dérivées d'images numériques formées dans des conditions prédéfinies dans une chaîne de production d'objets à identifier.

Les caractéristiques d'une image numérique d'un objet dépendent naturellement des conditions de la prise de vue de l'image, comme le type du système optique utilisé pour former l'image, ainsi que sa distance et son positionnement angulaire par rapport à l'objet. Une clef numérique dérivée de l'image, dépendra fortement de ces paramètres et caractérisera finalement autant les conditions de prise de vue de l'image elle-même que l'objet représenté sur l'image. En conséquence, utiliser des clefs numériques de deux images différentes d'un même objet pour authentifier ledit objet reste un défi majeur.

Idéalement, un système d'authentification par voie optique doit permettre la dérivation d'une clef numérique unique et invariante à partir de deux images différentes d'un même identificateur, et ce en dépit de différences et d'inconnues dans les conditions de prise de vue des deux images ainsi que dans le matériel utilisé. Ceci vaut en particulier pour le cas où une image est formée par un usager final, non spécialement équipé et non formé.

Les documents de brevets EP 2 849 118, US 2006/0268259, EP 1 475 242 et EP 1 873 616 divulguent des méthodes dans lesquelles on analyse des images d'identificateur comprenant des éléments formant des motifs sur lesquels se fondent l'authentification d'un produit, mais ces méthodes sont complexes et/ou basées sur des identificateurs sophistiqués.

Exposé de l'invention

L'invention a pour but de remédier à ces inconvénients.

Une méthode d'identification par voie optique selon l'invention repose sur l'emploi d'un identificateur de structure extrêmement simple à apposer sur l'objet à identifier, comprenant des microbilles de même diamètre réparties selon un motif aléatoire sur une surface de l'objet à authentifier.

En particulier, la méthode d'authentification selon l'invention pour authentifier des objets utilise un identificateur qui est apposé sur chaque objet et comprend les étapes suivantes :

- apposer l'identificateur sur un objet à authentifier ;
- former une première image numérique de l'identificateur apposé sur l'objet ;
- dériver une première clef numérique à partir de la première image ;
- enregistrer la première clef numérique dans une base de données stockant une pluralité de premières clefs numériques ;
- ultérieurement, former une seconde image numérique de l'identificateur apposé sur l'objet ;
- dériver une seconde clef numérique à partir de la seconde image ; et
- comparer la seconde clef numérique aux premières clefs numériques stockées dans la base de données pour détecter une concordance, et en réponse à ladite détection, identifier l'objet comme étant un objet authentique,

dans laquelle on utilise comme identificateur qui est apposé sur un objet des microbilles de même diamètre réparties de manière aléatoire sur la surface de l'objet, les microbilles étant noyées dans une couche de liant projeté sur la surface de l'objet, et dans laquelle la dérivation de la première clef numérique à partir de la première image comprend les étapes de :

- appliquer une régression elliptique à une distribution de points situés chacun à un emplacement de l'une des microbilles dans la première image pour définir une ellipse ; et
- appliquer un changement de repère consistant à exprimer des coordonnées de chaque point de la répartition dans un repère basé sur l'ellipse.

Un avantage de la méthode selon l'invention repose sur le fait que quels que soient l'angle et la distance de prise de vue, les microbilles sont vues comme des disques ou des cercles. Il est donc aisé de les identifier dans une image numérique de l'identificateur et de déterminer le motif qu'elles forment. De plus, les microbilles étant de même diamètre, il est possible, à partir de leurs diamètres apparents sur l'image, de procéder à un traitement numérique relativement simple pour décrire leur répartition indépendamment de leurs coordonnées dans un repère lié à l'image en établissant un repère propre au motif formé par les microbilles. En d'autres termes, le motif formé par les microbilles peut être caractérisé indépendamment des conditions de prise de vue.

Une telle méthode d'authentification selon l'invention est suffisamment robuste pour vérifier de façon fiable l'authenticité d'un objet sur lequel un identificateur est apposé, et ce par un utilisateur final sans connaissances particulières et sans matériel dédié à cet usage.

A la différence d'autres techniques, cette méthode d'identification ne requiert pas d'association avec un code d'identification prédéterminé associé à une marque d'authentification. L'identificateur selon l'invention peut se suffire à lui-même, ce qui offre une grande souplesse d'utilisation et simplifie l'ensemble du processus de mise en application, de la pose de l'identificateur et la gestion du service d'identification par un fournisseur à l'utilisation par un utilisateur final.

De plus, cette méthode se prête bien à une fabrication et une utilisation en grandes séries des objets. Il est aisé d'adapter la méthode à diverses applications, simplement en jouant sur, par exemple, la taille de l'identificateur lui-même et/ou sur le diamètre et le nombre de microbilles.

La méthode d'authentification selon l'invention peut encore présenter les particularités suivantes :

- la dérivation de la seconde clef numérique à partir de la seconde image peut comprendre les étapes de :

  - appliquer une étape de correction d'assiette à une distribution de points situés chacun à un emplacement de l'une des microbilles dans la seconde image de manière à reconstituer une image de l'identificateur tel que vu selon une direction perpendiculaire à la surface sur laquelle il est formé ;
  - appliquer une régression elliptique à la distribution de points correspondant chacun à l'une des microbilles dans la seconde image ayant subi la correction d'assiette pour définir une ellipse ; et
  - appliquer un changement de repère consistant à exprimer des coordonnées de chaque point de la répartition dans un repère basé sur l'ellipse ;

- la méthode peut comprendre une étape de normalisation des coordonnées des points de la répartition dans le repère basé sur l'ellipse par multiplication avec un rapport d'homothétie égal au rapport du diamètre réel des microbilles divisé par un diamètre moyen des microbilles telles que vues sur l'image ;
- on peut appliquer une régression circulaire à des images des microbilles visibles dans la première image numérique et/ou la seconde image numérique ;
- on peut utiliser des microbilles d'une première luminance et/ou d'une première teinte et des microbilles d'une seconde luminance et/ou d'une seconde teinte différentes de la première luminance et/ou de la première teinte, respectivement, de manière à ce qu'une partie des microbilles au moins présente un contraste visuel avec la surface de l'objet suffisant pour être identifiée automatiquement à partir des images numériques ;
- on peut projeter le liant sur la surface de l'objet en l'inscrivant dans un cercle de diamètre inférieur ou égal à 15 mm ;
- on peut projeter le liant sur la surface de l'objet en l'inscrivant dans une ellipse d'excentricité supérieure ou égale à 1,5 et de grand axe inférieur ou égal à 15 mm ;
- on peut utiliser un marquage d'authentification comprenant entre 10 et 100 microbilles chacune ayant un diamètre compris entre 20 et 150 $\mu$m ;
- on peut former la seconde image à l'aide d'un téléphone intelligent muni d'une caméra et d'une unité de traitement de données et dériver la seconde clef numérique de la seconde image au moyen de ladite unité de traitement de données du téléphone intelligent et/ou au moyen d'une unité distante de traitement de données.

Présentation sommaire des dessins

La présente invention sera encore mieux comprise et d'autres avantages apparaîtront à la lecture de la description détaillée d'un mode de réalisation pris à titre d'exemple nullement limitatif et illustré par les dessins annexés, dans lesquels :

- les figures 1A et 1B illustrent chacune une vue en plan d'un identificateur selon l'invention.
- la figure 1C illustre une vue en coupe de l'identificateur de la figure 1A
- la figure 1D illustre une chaîne de marquage d'objets à authentifier utilisant l'identificateur de la figure 1A ou 1B.
- la figure 2A illustre une méthode d'authentification utilisant le marquage d'authentification de la figure 1A ou 1B.
- La figure 2B illustre la formation d'une image numérique de l'identificateur de la figure 1A ou 1B.

- La figure 3 représente un traitement numérique d'une image représentant l'identificateur de la figure 1A ou 1B.
- Les figures 4A à 4D illustrent des étapes du traitement numérique de la figure 3.

## Description d'un mode de réalisation de l'invention

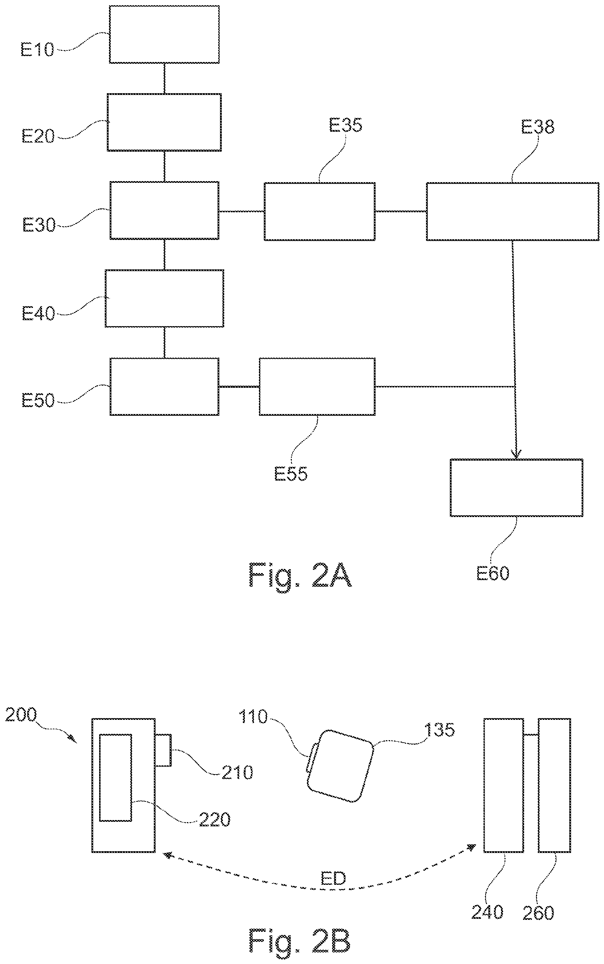

Une méthode d'authentification selon l'invention est illustrée par les figures 2A et 2B.

La première étape E10 consiste à fournir un objet à authentifier, par exemple en phase de production d'objets comme des bouteilles de vin ou des étiquettes d'identification. Lors de l'étape E20, un identificateur 100 est apposé sur la surface de l'objet. Il est à noter que puisque l'identificateur servira à générer par lui-même une clef numérique d'identification, fournir un code d'identification associé à l'identificateur n'est pas nécessaire. Suite à l'apposition de l'identificateur, une première image numérique de l'identificateur est formée au cours de l'étape E30, puis une première clef numérique est dérivée de la première image au cours de l'étape E35. Cette clef est stockée dans une base de données 240 stockant une pluralité de premières clefs numériques au cours de l'étape E38.

Ultérieurement, l'objet est cédé à un usager à l'étape E40. L'usager met en œuvre une partie de la méthode d'authentification en formant une seconde image numérique de l'identificateur au cours de l'étape E50 à l'aide d'un dispositif de prise d'image. Le dispositif de prise d'image peut être un téléphone intelligent 200 muni d'une caméra 210 et d'une unité 220 de traitement de données.

Une seconde clef numérique est dérivée de la seconde image au cours de l'étape E55. Les opérations de calculs nécessaires peuvent être effectuées, par exemple, par l'unité de traitement de données 220 du téléphone intelligent 200.

Durant l'étape E60, la seconde clef numérique est comparée avec une ou plusieurs des premières clefs numériques de la base données 240 pour détecter une concordance.

Lors des étapes E50, E55, et E60, l'usager peut se trouver à distance de la base de données et la seconde clef numérique peut être envoyée à la base de données pour comparaison par le téléphone intelligent 200 via un réseau d'échange de données ED comme, par exemple, internet. Alternativement, la seconde image numérique peut être envoyée telle quelle à la base de donnée 240 et/ou être traitée numériquement par une unité distante 260 de traitement de données connectée à la base de donnée 240 pour en dériver la seconde clef numérique. Une autre alternative est de procéder à un pré-traitement de l'image au niveau de l'usager par l'unité 220 de traitement de données du téléphone intelligent, consistant par exemple en un nettoyage de l'image par suppression du bruit, une conversion en noir et blanc, un ajustement du contraste, ou encore une compression, puis d'envoyer l'image pré-traitée à l'unité distante 260 de traitement de données pour compléter l'opération de génération de la second clef numérique et pour effectuer la comparaison avec une ou plusieurs des premières clefs numériques de la base données 240.

En réponse à la détection d'une concordance dans la base de données, l'objet est identifié comme étant un objet authentique et un message de confirmation d'authenticité peut être envoyé vers le téléphone portable 200.

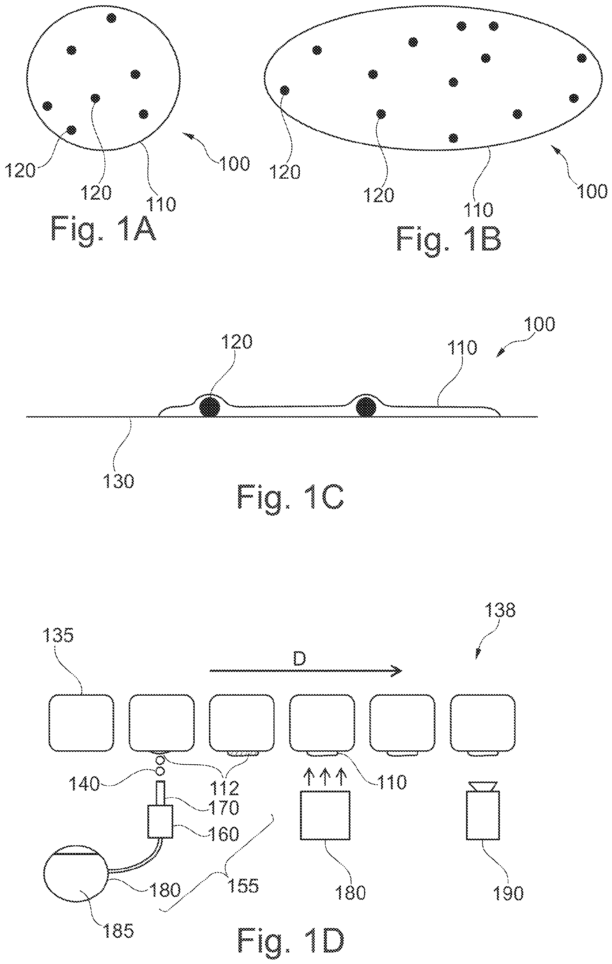

L'identificateur, son apposition sur des objets à authentifier, ainsi que la formation de la première image numérique sont illustrés par les figures 1A à 1D.

Un identificateur 100 comprend une couche 110 de liant apposé sur une surface 130 d'un objet à authentifier 135. Des microbilles 120 de même diamètre réparties de manière aléatoire sur la surface 130 sont inclues dans la couche 110.

Il est à noter que le terme « même diamètre » doit être évalué au regard de l'application visée et du cahier des charges associé. Le point important est que le diamètre et la sphéricité des billes soient suffisamment homogènes pour mettre en œuvre la méthode de détermination des clefs numériques. Il est possible d'utiliser des microbilles du fabricant Cospheric, par exemple des sphères de poly(methyl methacrylate), ou PMMA, de diamètres garantis compris à 90% dans une plage de 45 à 47 $\mu$m et de sphéricité supérieure à 99%.

Une couche 110 de liant illustré par la figure 1A peut former un disque. Préférentiellement, la couche de liant a une forme allongée, telle une ellipse, comme illustré par la couche 110' de l'identificateur 100' illustré par la figure 1B. Une forme allongée pour la couche 110 favorise grandement la robustesse de la méthode d'identification en facilitant la détermination d'un repère propre à l'image formée par les microbilles et donc la détermination de clefs numériques.

Comme illustré dans la figure 1D, le marquage d'un objet à authentifier 135 au moyen de l'identificateur 100 ou de l'identificateur 100' est réalisé en projetant sur la surface 130 de l'objet à authentifier 135 une ou plusieurs gouttes 140 de liant durcissable liquide 185, tel un liquide polymérisable, contenant des microbilles 120.

Le marquage se fait au sein une chaîne de marquage 138 dans laquelle une pluralité d'objets à authentifier 135 se déplacent le long de la chaine 138 dans la direction D, et sont marqués successivement.

Le liant durcissable 185 est pulvérisé par un système de spray 155 employant un système d'éjection 160 comprenant une buse 170 et relié à un réservoir 180 contenant le liant durcissable 185 dans lequel sont mélangées les microbilles 120.

La ou les gouttes 140 s'étalent à la surface 130 de l'objet à authentifier 135 et forment un film mince liquide 112 dans lequel les microbilles 120 sont réparties selon un motif aléatoire.

Le marquage est finalisé par durcissage du film mince liquide 112 au moyen d'un polymérisateur 180 dans le cas où le liant durcissable est un liquide polymérisable, formant ainsi la couche 110 de liant et fixant définitivement une répartition des microbilles 120 selon une répartition unique et non prévisible.

En utilisant une buse asymétrique ou en déplaçant la buse relativement à l'objet à authentifier en cours de projection, on peut donner à la couche 110 une forme allongée.

Un cas particulier mais non limitatif est celui de l'utilisation d'un photopolymère en tant que liant durcissable 185. Le polymérisateur 180 est alors une source de lumière, préférentiellement de lumière ultraviolette.

Le liant durcissable 185 peut aussi être une peinture ou un vernis, et le polymérisateur 180 une source de chaleur ou de rayonnement infrarouge. Il est préférable que le liant ait un temps de durcissage court, de manière à ne pas ralentir la chaîne de production ou compliquer le procédé.

Comme indiqué dans la figure 1D, la chaine de marquage 158 comprend un appareil de prise de vue 190 afin de former une première image de la signature physique (100) en sortie de chaîne.

Former une couche de liant allongée comme illustré dans la figure 1B (110B) peut contribuer à faciliter la création d'un repère propre à l'identificateur de la manière détaillée par la suite.

Les microbilles peuvent être des microbilles transparentes ou opaques, colorées ou incolores, le point essentiel étant de maintenir une bon contraste visuel par rapport à la surface de l'objet sur laquelle les microbilles sont disposées. Par bon contraste visuel, on entend que les microbilles doivent être identifiables comme des disques ou des cercles par des moyens de traitements d'image numérique automatiques courants dans des images numériques de l'identificateur.

Pour parer à des problèmes de contraste visuel, il est également possible d'utiliser des microbilles de luminances et/ou teintes différentes les unes des autres. Par exemple, dans le cas d'une surface présentant un motif blanc et noir, utiliser en combinaison des microbilles blanches et des microbilles noires permet de garantir qu'au moins certaines des microbilles restent clairement visibles. Autrement dit, une partie au moins des microbilles présente un bon contraste visuel avec la surface de l'objet sur laquelle elles sont dispersées.

Les microbilles peuvent avoir un diamètre tel que les appareils de prises du vue courants soient capables d'imager les microbilles avec une résolution suffisante, c'est-a-dire de les imager sous forme de disques ou de cercles. Des diamètres adéquats des microbilles selon l'invention peuvent être compris entre 20 $\mu$m et 150 $\mu$m.

La couche de liant peut être dimensionnée pour s'inscrire dans cercle de 15 mm de diamètre, préférentiellement dans un disque de 10 mm de diamètre, et plus préférentiellement dans un disque de 7 mm de diamètre. Alternativement, la couche de liant peut s'inscrire dans une ellipse d'excentricité supérieure ou égale à 1,5 et de grand axe inférieur ou égal à 15 mm, préférentiellement 10 mm, et plus préférentiellement 7 mm La couche de liant peut également être transparente. Ces caractéristiques, seules ou en combinaisons, ont pour avantage de mener à un marquage discret n'altérant pas significativement le l'apparence extérieure de l'objet à authentifier.

Le nombre et la taille des microbilles 120 peuvent être optimisés en fonction de la taille de la couche 110 dans laquelle elles sont incluses pour (1) permettre un nombre de configurations possibles suffisant pour qu'en pratique chaque répartition de microbilles d'un identificateur soit unique et (2) maintenir la probabilité d'obtenir des clusters (amas de microbilles en contact les unes avec les autres) sous une limite acceptable au regard des contraintes de l'application visée. Pour des couches 110 de liant s'étendant sur un segment de droite de longueur supérieure à 3 mm et s'inscrivant dans un cercle de diamètre de 15 mm, il est considéré comme adéquat qu'un marquage d'authentification comprenne entre 10 et 100 microbilles, préférentiellement entre 20 et 100 microbilles, d'un diamètre compris entre 20 $\mu$m et 150 $\mu$m, préférablement entre 30 $\mu$m et 70 $\mu$m. La probabilité de trouver un ou plusieurs clusters dans la couche 110 est préférablement maintenu au-dessous de 10%, préférentiellement au-dessous de 5%. Le nombre moyen de microbilles d'identificateurs s'ajuste en jouant sur la densité de microbilles 120 présentes dans le liquide polymérisable 185.

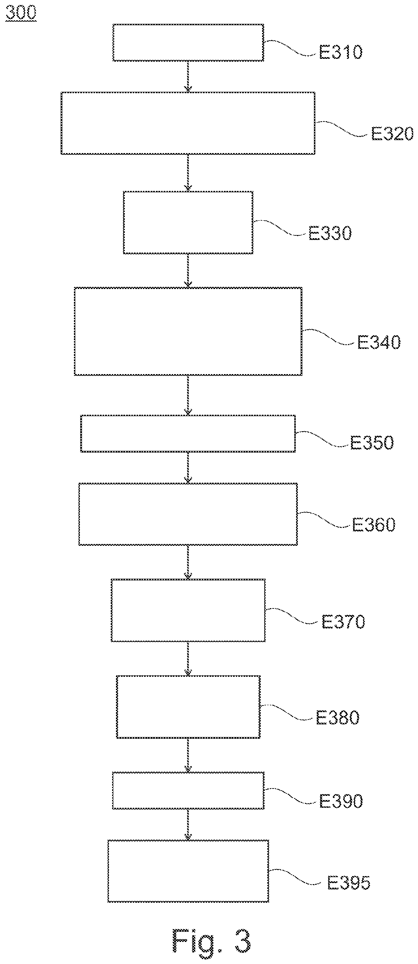

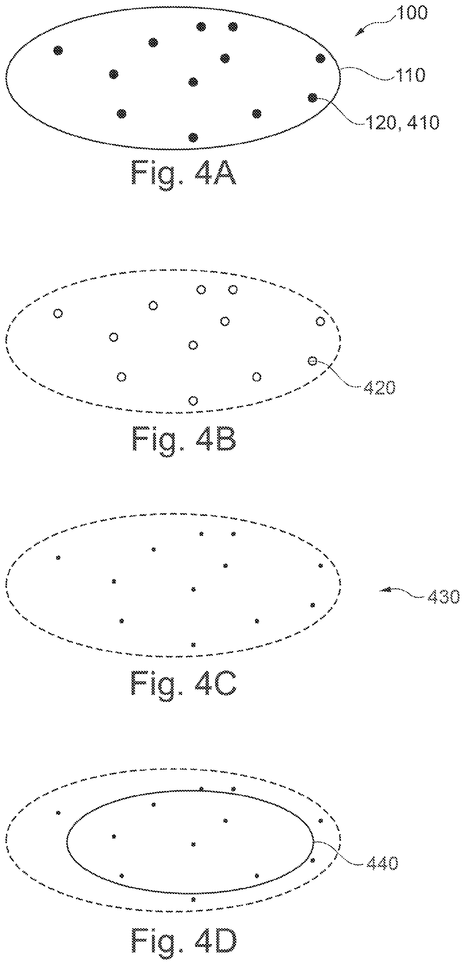

Un traitement numérique 300 pouvant être appliqué à la première et/ou à la seconde image, est illustré par les figures 3 et 4A à 4D. Ce traitement numérique 300, qui se conclut par la génération d'une clef numérique, a pour but d'obtenir des clefs numériques identiques pour des images différentes d'un même identificateur.

Après la formation d'une image numérique de l'identificateur 100 durant l'étape E310, des motifs circulaires 410 (des cercles ou des disques) sont identifiés sur l'image pendant l'étape E320. Ces motifs circulaires correspondent aux microbilles 120 de l'identificateur 100, visibles sous formes circulaires quels que soit la distance et l'angle de prise de vue, et donc aisément identifiables.

Alternativement et préférentiellement à la détection des motifs circulaires dans l'image numérique, l'hypothèse est faite que les taches de contraste visibles sur l'image correspondent à des cercles ou à des disques, simplifiant considérablement l'étape E320 d'identification. Cette hypothèse sera d'autant plus réaliste que le taux de clusters de microbilles acceptable est bas. L'avantage de cette approche est d'éliminer la nécessité de rechercher des formes circulaires dans l'image, limitant ainsi drastiquement les besoins en calcul. Ainsi, chaque tache de contraste visible, comme chaque motif circulaire, peut correspondre à l'une des microbilles.

Pour s'affranchir des effets de pixellisation, il est possible d'appliquer au cours d'une étape E330 une régression circulaire à chacun des motifs circulaires identifiés au cours de l'étape E320. On peut alors remplacer les motifs circulaires 210 ou les taches de contrastes identifiés originaux par des motifs circulaires calculés 420. L'application de cette régression circulaire facilite les calculs suivants et améliore considérablement leurs précisions, en particulier lors de l'étape de correction d'assiette 350.

Les diamètres et/ou les positions des centres des motifs circulaires ou des taches de contrastes, ou des motifs circulaires calculés, sont déterminés durant l'étape E340 et peuvent s'exprimer dans un repère propre à l'image numérique. Les positions de chacun des centres correspondent à des points formant une distribution 430 de points. C'est sur cette distribution 430 de points, chacun situé au centre de l'image de l'une des microbilles de l'image numérique de l'identificateur, que sera basée la génération de la clef numérique. Il est à noter que d'autres méthodes que celle décrite plus haut peuvent être appliquées, tant qu'une distribution de points réparties de la même manière que les images des microbilles, et de préférence que les centres de celles-ci, est déterminée.

Le traitement numérique peut comprendre l'étape de correction d'assiette E350 corrigeant les effets que peut avoir l'orientation de l'appareil de prise de vue sur une image numérique. Cette correction, permettant de reconstituer une image de l'identificateur tel que vu selon une direction perpendiculaire à la surface sur laquelle il est formé, est rendue possible par la connaissance du diamètre réel des microbilles. Cette étape peut-être utile pour corriger une image numérique de l'identificateur acquise selon une direction trop éloignée de la perpendiculaire à la surface sur laquelle celui-ci est formé pour former une clef numérique invariante.

La correction peut comprendre la détermination de deux angles, $\theta$ et $\varphi$, correspondant à, respectivement, un premier écart d'assiette par rapport à un premier axe et un second écart d'assiette par rapport à un second axe d'un capteur photographique de l'appareil de prise de vue utilisé pour former l'image numérique, le second axe étant perpendiculaire au premier axe. Le premier angle, désigné par $\theta$, peut être déterminé de la façon suivante. Le premier axe et le second axe du capteur peuvent correspondre à deux bords perpendiculaires de l'image numérique acquise par l'appareil de prise de vue.

La distance entre le capteur photographique et le marquage d'authentification est notée D et la focale de l'optique de l'appareil de prise de vue est notée f. Le diamètre $\varnothing_{b\ image}$ d'une microbille dans l'image est le produit du grandissement par le diamètre réel des microbilles Ø, soit :

$$\varnothing_{b\ image} = \varnothing_b \frac{f}{D}$$

Dans le plan image du dispositif de prise de vue, le diamètre d'une microbille k peut s'exprimer par :

$$\varnothing^k_{b\ image} = \varnothing_b \frac{f}{D - l_k \tan} = \varnothing_{b\ image} \frac{1}{1 - \frac{l_k}{D}\tan}$$

Où $l_k$ est la distance de la microbille k au premier axe. Pour un petit angle $\theta$, cette relation se simplifie en

$$\varnothing^k_{b\ image} = \varnothing_{b\ image}\left(1 + \frac{l_k}{D}\right)$$

Cette relation permet de déterminer $\theta$ par une régression linéaire appliquée à un nuage de points de couples de coordonnées $(l_k\ ;\ \varnothing^k_{b\ image})$. Par la suite, une rotation d'angle $\theta$ autour de l'axe correspondant est appliquée aux points de la distribution selon des méthodes bien connues. Selon le même principe, $\varphi$ est déterminé et une rotation d'angle $\varphi$ est appliquée aux points de la distribution. A l'issu de ces deux rotations, toute les microbilles doivent avoir un même diamètre apparent dans l'image.

Les étapes E360, E370 et E380 ont pour but de générer un repère propre à la distribution 430. Pour ce faire, une régression elliptique appliquée aux points de la distribution, ayant subi ou non la correction d'assiette, définit l'ellipse 440 passant le mieux par l'ensemble des points de la répartition, au cours de l'étape E360.

Il est à noter que si une répartition de point fixée dans une couche 110' de liant généralement allongée comme illustrée dans la figure 4A est favorable à la génération du repère, utiliser une couche 110 généralement circulaire comme illustré dans la figure 1A reste possible.

L'étape E370 consiste à déterminer le centre de l'ellipse, son grand axe, son petit axe, et l'angle du grand axe dans le repère de l'image numérique initiale. Le centre de l'ellipse, son grand axe, et son petit axe peuvent définir, respectivement, le centre, l'axe des abscisses, et l'axe des ordonnés d'un nouveau repère, propre à la répartition de points.

Les coordonnées de chaque point de la répartition sont exprimées dans le repère basé sur l'ellipse 440 au cours de l'étape de changement de repère E380. Après ce changement de repère, les points de la répartition ont des coordonnées exprimées dans un repère purement lié à la répartition elle-même, et non à l'image numérique comme cela était le cas jusqu'à cette étape.

L'étape E390 consiste à normaliser les coordonnées des points de la répartition par multiplication avec un rapport d'homothétie égal au rapport du diamètre réel des microbilles divisé par un diamètre moyen des formes circulaires calculé sur l'image, autrement dit, divisé par un diamètre moyen des microbilles telles que vues sur l'image.

Cette étape rend la génération de la clef numérique indépendante de l'angle de champ du dispositif optique utilisé pour la formation de l'image et/ou de la distance du capteur du dispositif optique au marquage d'authentification lors de l'acquisition de l'image, et facilite donc la génération d'une clef numérique invariante.

A partir d'une image du marquage d'authentification 100 tel que décrit plus haut et à la suite du traitement numérique des étapes E320 à E390, une clef numérique indépendante des conditions de prise de vue de peut être générée au cours de l'étape E395 de génération d'une clef numérique.

Il est à noter qu'il n'est pas nécessaire d'appliquer systématiquement toutes les étapes de traitement numérique décrites ci-dessus. L'étape E350 de correction d'assiette, par exemple, se prête particulièrement à la situation d'un usager formant une image de la marque d'authentification à main levée, dans des conditions mal contrôlées, en particulier en ce qui concerne l'angle de prise de vue. Dans ce cas, il est vraisemblable qu'une correction d'assiette est nécessaire. En revanche, dans des conditions d'usine, l'orientation du dispositif de prise d'image peut être contrôlée de manière à rendre l'étape de correction d'assiette superflue.

**Revendications**

1. Méthode d'authentification pour authentifier des objets en utilisant un identificateur (100, 100') qui est apposé sur chaque objet (135), comprenant les étapes suivantes :

   - apposer l'identificateur (E20) sur un objet à authentifier ;
   - former une première image numérique de l'identificateur (100, 100') apposé sur l'objet (E30) ;
   - dériver une première clef numérique à partir de la première image (E35) ;
   - enregistrer la première clef numérique dans une base de données (240) stockant une pluralité de premières clefs numériques (E38) ;
   - ultérieurement, former une seconde image numérique de l'identificateur (100, 100') apposé sur l'objet (E50) ;
   - dériver une seconde clef numérique à partir de la seconde image (E55) ; et
   - comparer la seconde clef numérique aux premières clefs numériques stockées dans la base de données (E60) pour détecter une concordance, et en réponse à ladite détection, identifier l'objet comme étant un objet authentique,

   dans laquelle on utilise comme identificateur (100, 100') qui est apposé sur un objet (135) des microbilles (120) de même diamètre réparties de manière aléatoire sur la surface de l'objet (135), les microbilles (120) étant noyées dans une couche (110, 110') de liant projeté sur la surface de l'objet (135)), et
   **caractérisée en ce que** la dérivation de la première clef numérique à partir de la première image comprend les étapes de :

   - appliquer une régression elliptique (E360) à une distribution (430) de points situés chacun à un emplacement de l'une des microbilles dans la première image pour définir une ellipse (440) ; et
   - appliquer un changement de repère (E380) consistant à exprimer des coordonnées de chaque point de la répartition dans un repère basé sur l'ellipse (440) .

2. Méthode d'authentification selon la revendication 1, **caractérisée en ce que** la dérivation de la seconde clef numérique à partir de la seconde image comprend les étapes de :

   - appliquer une étape de correction d'assiette (E350) à une distribution (430) de points situés chacun à un emplacement de l'une des microbilles dans la seconde image de manière à reconstituer une image de l'identificateur tel que vu selon une direction perpendiculaire à la surface sur laquelle il est formé ;
   - appliquer une régression elliptique (E360) à la distribution (430) de points correspondant chacun à l'une des microbilles dans la seconde image ayant subi la correction d'assiette pour définir une ellipse (440) ; et
   - appliquer un changement de repère (E380) consistant à exprimer des coordonnées de chaque point de la répartition dans un repère basé sur l'ellipse (440) .

3. Méthode d'authentification selon la revendication 1 ou la revendication 2, **caractérisée en ce qu'**elle comprend une étape de normalisation des coordonnées des points de la répartition dans le repère basé sur l'ellipse par multiplication avec un rapport d'homothétie égal au rapport du diamètre réel des microbilles divisé par un diamètre moyen des microbilles telles que vues sur l'image.

4. Méthode d'authentification selon l'une quelconque des revendications 1 à 3, **caractérisée en ce qu'**une régression circulaire est appliquée à des images des microbilles (120) visibles dans la première image numérique et/ou la seconde image numérique.

5. Méthode d'authentification selon l'une quelconque des revendications 1 à 4, **caractérisée en ce qu'**on utilise des microbilles (120) d'une première luminance et/ou d'une première teinte et des microbilles d'une seconde luminance et/ou d'une seconde teinte différentes de la première luminance et/ou de la première teinte, respectivement, de manière à ce qu'une partie des microbilles (120) au moins présente un contraste visuel avec la surface de l'objet (135) suffisant pour être identifiée automatiquement à partir des images numériques.

6. Méthode d'authentification selon l'une quelconque des revendications 1 à 5, **caractérisée en ce qu'**on projette le liant (185) sur la surface de l'objet (135) en l'inscrivant dans un cercle de diamètre inférieur ou égal à 15 mm.

7. Méthode d'authentification selon l'une quelconque des revendications 1 à 5, **caractérisée en ce qu'**on projette le liant (185) sur la surface de l'objet (135) en l'inscrivant dans une ellipse d'excentricité supérieure ou égale à 1,5 et de grand axe inférieur ou égal à 15 mm.

8. Méthode d'authentification selon l'une quelconque des revendications 1 à 5, **caractérisée en ce qu'**on utilise un identificateur (100, 100') comprenant entre 10 et 100 microbilles (120) chacune ayant un diamètre compris entre 20 $\mu$m et 150 $\mu$m.

9. Méthode d'authentification selon l'une quelconque des revendications 1 à 8, **caractérisée en ce que** la seconde image est formée à l'aide d'un téléphone intelligent (200) muni d'une caméra (210) et d'une unité de traitement (220) de données et **en ce que** la seconde clef numérique est dérivée de la seconde image au moyen de ladite unité de traitement (220) de données du téléphone intelligent (200) et/ou au moyen d'une unité distante (260) de traitement de données.


**Patentansprüche**

1. Authentifizierungsverfahren zum Authentifizieren von Gegenständen unter Verwendung eines Identifikators (100, 100'), der auf jedem Gegenstand (135) angebracht ist, umfassend die folgenden Schritte:

   - Anbringen des Identifikators (E20) auf einem zu authentifizierenden Gegenstand;
   - Erzeugen eines ersten digitalen Bildes des auf dem Gegenstand (E30) angebrachten Identifikators (100, 100');
   - Ableiten eines ersten digitalen Schlüssels ausgehend von dem ersten Bild (E35);
   - Speichern des ersten digitalen Schlüssels in einer Datenbank (240), in welcher eine Mehrzahl von ersten digitalen Schlüsseln (E38) abgelegt sind;
   - anschließend, Erzeugen eines zweiten digitalen Bildes des auf den Gegenstand (E50) angebrachten Identifikators (100, 100');
   - Ableiten eines zweiten digitalen Schlüssels ausgehend von dem zweiten Bild (E55); und
   - Vergleichen des zweiten digitalen Schlüssels mit den ersten digitalen Schlüsseln, die in der Datenbank (E60) abgelegt sind, um eine Konkordanz zu erfassen, und in Reaktion auf eine solche Erfassung, Identifizieren des Gegenstands als authentischen Gegenstand,

   bei dem als auf einen Gegenstand (135) angebrachter Identifikator (100, 100') Mikrokugeln (120) gleichen Durchmessers, die auf zufällige Weise auf der Oberfläche des Gegenstandes (135) verteilt sind, verwendet werden, wobei die Mikrokugeln (120) in einer Lage (110, 110') von Bindemittel, das auf die Oberfläche des Gegenstandes (135) aufgebracht wurde, getränkt sind, und
   **dadurch gekennzeichnet, dass** die Ableitung des ersten digitalen Schlüssels ausgehend von dem ersten Bild die Schritte umfasst:

   - Anwenden einer elliptischen Regression (E360) auf eine Verteilung (430) von Punkten, die jeder an einem Ort einer der Mikrokugeln in dem ersten Bild angeordnet sind, um eine Ellipse (440) zu definieren; und
- Anwenden einer Bezugspunktänderung (E380), die darin besteht, Koordinaten jedes Punktes der Verteilung in einem auf der Ellipse (440) basierenden Bezugspunkt auszudrücken.

2. Authentifizierungsverfahren nach Anspruch 1, **dadurch gekennzeichnet, dass** die Ableitung des zweiten digitalen Schlüssels ausgehend von dem zweiten Bild die Schritte umfasst:

- Anwenden eines Neigungswinkelkorrekturschritts (E350) auf eine Verteilung (430) von Punkten, die jeder an einem Ort einer der Mikrokugeln in dem zweiten Bild angeordnet sind, um ein Bild des Identifikators wie in einer Richtung senkrecht zu der Oberfläche, auf der er gebildet ist, wiederherzustellen;
- Anwenden einer elliptischen Regression (E360) auf die Verteilung (430) von Punkten, die jeder einer der Mikrokugeln in dem zweiten Bild entsprechen, nachdem die Neigungswinkelkorrektur zum Definieren einer Ellipse (440) erfolgt ist; und
- Anwenden einer Bezugspunktänderung (E380), die darin besteht, Koordinaten jedes Punktes der Verteilung in einem auf der Ellipse (440) basierenden Bezugspunkt auszudrücken.

3. Authentifizierungsverfahren nach Anspruch 1 oder Anspruch 2, **dadurch gekennzeichnet, dass** es einen Normalisierungsschritt der Koordinaten der Punkte der Verteilung in dem auf der Ellipse basierenden Bezugspunkt durch Multiplikation mit einem Homothetie-Verhältnis umfasst, das gleich dem Verhältnis des reellen Durchmessers der Mikrokugeln geteilt durch einen mittleren Durchmesser der auf dem Bild gesehenen Mikrokugeln ist.

4. Authentifikationsverfahren nach einem der Ansprüche 1 bis 3, **dadurch gekennzeichnet, dass** eine kreisförmige Regression auf Bilder der in dem ersten digitalen Bild und/oder dem zweiten digitalen Bild sichtbaren Mikrokugeln (120) angewendet wird.

5. Authentifizierungsverfahren nach einem der Ansprüche 1 bis 4, **dadurch gekennzeichnet, dass** Mikrokugeln (120) einer ersten Leuchtdichte und/oder einer ersten Färbung und Mikrokugeln einer zweiten Leuchtdichte und/oder einer zweiten Färbung, die jeweils von der ersten Leuchtdichte und/oder der ersten Färbung verschieden sind, derart verwendet werden, dass ein Teil der Mikrokugeln (120) wenigstens einen sichtbaren Kontrast mit der Oberfläche des Gegenstands (135) aufweist, der ausreichend ist, um automatisch ausgehend von den digitalen Bildern identifiziert zu werden.

6. Authentifizierungsverfahren nach einem der Ansprüche 1 bis 5, **dadurch gekennzeichnet, dass** das Bindemittel (185) auf die Oberfläche des Gegenstandes (135) aufgebracht wird, indem es in einem Kreis mit einem Durchmesser kleiner oder gleich 15 mm eingetragen wird.

7. Authentifizierungsverfahren nach einem der Ansprüche 1 bis 5, **dadurch gekennzeichnet, dass** das Bindemittel (185) auf die Oberfläche des Gegenstandes (135) aufgebracht wird, indem es in einer Ellipse mit einer Exzentrizität größer oder gleich 1,5 und einer großen Achse kleiner oder gleich 15 mm eingetragen wird.

8. Authentifizierungsverfahren nach einem der Ansprüche 1 bis 5, **dadurch gekennzeichnet, dass** ein Identifikator (100, 100') verwendet wird, der zwischen 10 und 100 Mikrokugeln (120) umfasst, welche jeweils einen Durchmesser zwischen 20 $\mu$m und 150 $\mu$m einschließlich aufweisen.

9. Authentifizierungsverfahren nach einem der Ansprüche 1 bis 8, **dadurch gekennzeichnet, dass** das zweite Bild durch ein mit einer Kamera (210) und einer Datenverarbeitungseinheit (220) ausgestattetes Smartphone (200) erzeugt wird, und dass der zweite digitale Schlüssel von dem zweiten Bild mittels der Datenverarbeitungseinheit (220) des Smartphones (200) und/oder wenigstens einer beabstandeten Datenverarbeitungseinheit (260) abgeleitet wird.

**Claims**

1. An authentication method for authenticating objects by using an identifier (100, 100') that is applied to each object (135), the method comprising the following steps:

• applying (E20) the identifier on an object that is to be authenticated;
• making (E30) a first digital image of the identifier (100, 100') applied to the object;

- deriving (E35) a first digital key from the first digital image;
- storing (E38) the first digital key in a database (240) containing a plurality of first digital keys;
- subsequently, making (E50) a second digital image of the identifier (100, 100') applied to the object;
- deriving (E55) a second digital key from the second image; and
- comparing the second digital key with the first digital keys stored in the database (E60) in order to detect a match, and in response to detecting a match, identifying the object as being authentic;

wherein, for the identifier (100, 100') that is applied to an object (135), use is made of same-diameter microbeads (120) distributed in a random manner on the surface of the object (135), the microbeads (120) being embedded in a layer (110, 110') of binder sprayed onto the surface of the object (135); and
**characterized in that** the derivation of the first digital key from the first image comprises the following steps:

- applying (E360) an elliptical regression to a distribution (430) of points, each situated at the location of a respective one of the microbeads in the first image, in order to define an ellipse (440); and
- applying (E380) a change of reference frame consisting in expressing the coordinates of each point of the distribution in a reference frame based on the ellipse (440).

2. An authentication method according to claim 1, **characterized in that** the derivation of the second digital key from the second image comprises the steps of:

- applying an attitude correction step (E350) to a distribution (430) of points, each situated at the location of a respective one of the microbeads in the second image, so as to reconstitute an image of the identifier as seen looking along a direction perpendicular to the surface on which the identifier is formed;
- applying (E360) an elliptical regression to the distribution (430) of points, each corresponding to a respective one of the microbeads in the second image that has been subjected to the attitude correction, in order to define an ellipse (440); and
- applying (E380) a change of reference frame consisting in expressing the coordinates of each point of the distribution in a reference frame based on the ellipse (440) .

3. An authentication method according to claim 1 or claim 2, **characterized in that** it includes a step of normalizing the coordinates of the points of the distribution in the reference frame based on the ellipse by multiplying by a scale factor equal to the ratio of the real diameter of the microbeads divided by the mean diameter of the microbeads as seen in the image.

4. An authentication method according to any one of claims 1 to 3, **characterized in that** a circular regression is applied to the images of the microbeads (120) visible in the first digital image and/or the second digital image.

5. An authentication method according to any one of claims 1 to 4, **characterized in that** use is made both of microbeads (120) of a first brightness and/or of a first hue and also of microbeads of a second brightness and/or of a second hue that are respectively different from the first brightness and/or the first hue, so that at least some of the microbeads (120) present sufficient visual contrast with the surface of the object (135) for them to be identified automatically from the digital images.

6. An authentication method according to any one of claims 1 to 5, **characterized in that** the binder (185) is sprayed onto the surface of the object (135) so as to be inscribed in a circle of diameter less than or equal to 15 mm.

7. An authentication method according to any one of claims 1 to 5, **characterized in that** the binder (185) is sprayed onto the surface of the object (135) so as to be inscribed in an ellipse of eccentricity greater than or equal to 1.5 and of major axis less than or equal to 15 mm.

8. An authentication method according to any one of claims 1 to 5, **characterized in that** an identifier (100, 100') is used that comprises a number of microbeads (120) lying in the range 10 to 100, each having a diameter lying in the range 20 $\mu$m to 150 $\mu$m.

9. An authentication method according to any one of claims 1 to 8, **characterized in that** the second image is made using a smartphone (200) having a camera (210) and a data processor unit (220), and **in that** the second digital key is derived from the second digital image by means of said data processor unit (220) of the smartphone (200) and/or by means of a remote data processor unit (260).

Fig. 1A

Fig. 1B

Fig. 1C

Fig. 1D

E10

E20

E30 — E35 — E38

E40

E50 — E55 — E60

## Fig. 2A

200

110 — 135

210

220

ED

240  260

## Fig. 2B

300

Fig. 3

Fig. 4A

Fig. 4B

Fig. 4C

Fig. 4D

**EP 3 655 889 B1**

## RÉFÉRENCES CITÉES DANS LA DESCRIPTION

**Documents brevets cités dans la description**

- WO 2006042913 A
- EP 2849118 A
- US 20060268259 A
- EP 1475242 A
- EP 1873616 A